# EUROPÄISCHE PATENTSCHRIFT

(11) **EP 3 036 147 B1**
(45) Veröffentlichungstag und Bekanntmachung des Hinweises auf die Patenterteilung: **07.03.2018**
(21) Anmeldenummer: 14752278.3
(22) Anmeldetag: 13.08.2014
(51) Int. Cl.: B62D 5/00

(54) **LENKANSCHLAG**
STEERING STOP
BUTÉE DE DIRECTION

(30) Priorität: 23.08.2013 DE 102013014121
(43) Veröffentlichungstag der Anmeldung: 29.06.2016
(73) Patentinhaber: Audi AG, 85045 Ingolstadt (DE)
(72) Erfinder: NAGL, Martin, 86643 Rennertshofen (DE); PFEIFFER, Ulrich, 85123 Karlskron / Probfeld (DE); KOCH, Tilo, 85055 Ingolstadt (DE); KLINGER, Thomas, 85057 Ingolstadt (DE); SATZKE, Anne, 85051 Ingolstadt (DE)
(74) Vertreter: Reichert, Thomas Klaus
(86) Internationale Anmeldenummer: PCT/EP2014/002228
(87) Internationale Veröffentlichungsnummer: WO 2015/024643

(56) Entgegenhaltungen:
- EP-A2- 1 334 896
- EP-A2- 2 631 154
- WO-A1-02/12052
- WO-A1-2014/076733
- DE-A1- 10 032 180
- DE-A1- 19 842 624
- DE-A1-102008 021 973
- DE-A1-102010 041 738

## Beschreibung

Die Erfindung betrifft einen Lenkanschlag gemäß dem Oberbegriff des Anspruchs 1 zur Verwendung in Steer-by-Wire Lenkungen insbesondere bei nicht-spurgebundenen Fahrzeugen.
Bei Steer-by-Wire-Lenkungen besteht keine direkte mechanische Kopplung zwischen dem Lenkrad und den gelenkten Rädern. Stattdessen wird über Sensoren der Lenkwinkel und/oder die Drehgeschwindigkeit des Lenkrads gemessen und über Aktoren werden die Räder entsprechend eingeschlagen. Derartige Anordnungen sind aus DE 10 2010 041 738 A1 oder DE 10 2008 021 973 A1 bekannt.
Bei Steer-by-Wire Lenkungen entfällt somit die unmittelbare Rückmeldung zwischen der Lenkwinkeleingabe des Fahrers über das Lenkrad und dem tatsächlich ausgeführten Einschlagwinkel am Rad. Entsprechend erhält der Fahrer keine Rückmeldung darüber, ob bei starkem Auslenken das Lenkgetriebe sich bereits im Anschlag befindet oder nicht. Bei einem frei durchdrehbaren Lenkrad lassen sich somit unendlich große Lenkwinkel erzeugen, ohne dass das Lenkgetriebe diese auch einstellen kann.
Die Aufgabe der vorliegenden Erfindung ist es, einen Lenkradanschlag für den Steer-by-Wire-Einsatz bereitzustellen, bei dem der Anwender ein haptisches Feedback bei dem Erreichen des maximal möglichen Einschlags der Räder erhält. Insbesondere soll hierbei betrachtet werden, dass unter unterschiedlichen Fahrbedingungen unterschiedliche maximale Einschlagwinkel der Räder und unterschiedliche Übersetzungsverhältnisse von dem Lenkradstellung zu dem Radeinschlag gefordert sein können.
Diese Aufgabe wird durch die Merkmale des Anspruchs 1 gelöst. Vorteilhafte Weiterbildungen ergeben sich aus den Unteransprüchen. Die WO-A-02/12052 offenbart einen Lenkanschlag mit den Merkmalen des Oberbegriffs des Anspruchs 1. Ein Lenkradanschlag für ein Steer-by-Wire-Lenksystem umfasst eine Lenkwelle zur funktionalen Verbindung mit einer Lenkhandhabe, insbesondere einem Lenkrad, wobei für jede Drehrichtung der Lenkwelle eine Druckkammer vorgesehen ist. Ein Drehen der Lenkwelle bewirkt insbesondere über eine Koppelung mit einem Hydraulikkolben eine Volumenreduzierung einer zugeordneten Druckkammer und der Lenkradanschlag umfasst ein Hydraulikventil, um beim Erreichen von vorgegebenen Umgebungsbedingungen durch ein Schalten des Hydraulikventils einen Widerstand gegen ein weiteres Drehen der Lenkwelle zu erzeugen. Anstelle der Kopplung der Lenkwelle mit einem Hydraulikkolben, die in der nachfolgenden bevorzugten Ausführungsform im Detail ausgeführt ist, kann die Lenkwelle auch mit dem Hydraulikzylinder gekoppelt sein und über einen feststehenden und doppelt wirkenden Hydraulikkolben kann die Volumenreduzierung bewirkt werden. Dabei gibt es naturgemäß zwei Drehrichtungen der Lenkwelle. Das Erreichen der vorgegebenen Umgebungsbedingungen wird insbesondere durch das Drehen der Lenkwelle bewirkt. Der Widerstand des Drehens der Lenkwelle wird insbesondere so verstanden, dass durch das geschaltete, also geschlossene Hydraulikventil ein (weiterer) Abfluss des Hydraulikfluids aus der Druckkammer verhindert wird und dadurch das Drehen in dieser Drehrichtung verhindert wird. Hierdurch wird es möglich, bei einem Lenkrad, welches keine Anschläge gegen ein freies (Durch-)Drehen hat, dem Fahrer eine Rückmeldung über das Erreichen des maximal möglichen Lenk-, bzw. Einschlagwinkels zu geben.

Bei einer Steer-by-Wire Lenkung besteht von der Lenkwelle keine mechanische oder hydraulische Kopplung über Getriebestufen oder dergleichen zu mechanischen Komponenten der Einstellung des Radeinschlagwinkels wie beispielsweise einer Spurstange. Vielmehr wird das Drehen der Lenkwelle in ein elektronisches Signal gewandelt und über dieses Signal wird die Einstellung des Radeinschlags veranlasst.

Insbesondere können die genannten Umgebungsbedingungen durch eine bestimmte oder bestimmbare Winkelposition der Lenkwelle oder Ausrichtung oder Position eines Bestandteils des Lenkradanschlags und/oder ein bestimmtes oder bestimmbares Volumen der Druckkammer und/oder einen bestimmten oder bestimmbaren Ab- oder Zufluss aus oder in eine der Druckkammern erhältlich sein. Eine Bestimmung der Winkelposition der Lenkwelle ist vorteilhaft, um reproduzierbar den jeweils gleichen Anschlag für das Lenkrad zu generieren. Die Erzeugung des Anschlags für das Lenkrad in Abhängigkeit von der Lage und/oder der Ausrichtung der Kolbenstange bewirkt, dass der Fahrer eine Rückmeldung bzw. ein Feedback der unmittelbaren Fahrzeugsituation erhält.
Weiter kann zumindest ein Teil der Druckkammer Bestandteil der Lenkwelle sein oder unmittelbar damit gekoppelt sein. Somit ist zur Realisation der Drive-by-Wire-Funktion eine räumliche Trennung von dem Hydrauliksystem gegeben, welches ggf. zur Einstellung der Räder verwendet wird und die unmittelbare Rückmeldung, bzw. Feedback von der Druckerhöhung in der Druckkammer auf den Fahrer wird verbessert.
Insbesondere ist zwischen beiden Druckkammern ein Hydrauliksystem angeordnet, um in Abhängigkeit der Schaltstellung des zumindest einen Hydraulikventils einen Fluidfluss von der einen in die andere Druckkammer zu ermöglichen. Da das Gesamtvolumen beider Druckkammern in jeder Position des Hydraulikkolbens konstant ist, kann auf diese Weise einfach ein geschlossenes Hydrauliksystem geschaffen werden.
Insbesondere wird bei der Drehung der Lenkwelle in einer ersten Richtung eine erste Druckkammer in ihrem Volumen reduziert und das Hydraulikventil ist eingerichtet, bei einer weiteren Drehung der Lenkwelle in die erste Richtung einen weiteren Abfluss aus der ersten Druckkammer zu verhindern. Dieser Zusammenhang gilt entsprechend auch für die zweite Druckkammer.
Bevorzugt ist für jede Druckkammer eine Hydraulikventilfunktion vorgesehen, wobei beide Hydraulikventilfunktionen insbesondere in einem gemeinsamen Hydraulikventil angeordnet sind, so dass auf diese Weise ein gleichartiger Anschlag bzw. Endlage für das Lenkrad in beiden Drehrichtungen geschaffen wird.

Auch ist erfindungsgemäss eine Rückschlagfunktion vorgesehen um im Zustand, dass bei einer Drehung der Lenkwelle in einer ersten Drehrichtung der Abfluss aus einer der Druckkammern durch das Schalten des Hydraulikventils begrenzt ist, ein Zufluss in diese Druckkammer möglich bleibt, um eine Drehbewegung der Lenkwelle in die der ersten Drehrichtung entgegen gesetzten Richtung nicht zu verhindern. Das Rückschlagventil kann Teil des Hydraulikventils sein oder als gesonderte Baugruppe parallel geschaltet sein.

Insbesondere entspricht eine durch das Drehen der Lenkwelle sich ergebende Verkleinerung des Volumens der einen Druckkammer einer identischen Volumenvergrößerung der anderen Druckkammer. So wird kein gesonderter Fluidausgleichsbehälter benötigt, da das Fluid, das aus der einen Druckkammer ausströmt, unmittelbar in die andere Druckkammer einströmen kann.

Weiter kann in dem Fluidkreis des Hydrauliksystems zwischen den Druckkammern ein Sperrventil angeordnet sein, das funktional von dem Hydraulikventil getrennt ist. 'Funktional getrennt' bedeutet insbesondere, dass das System eine getrennte Ansteuerlogik mit einem getrennten (Elektro-)Stellantrieb umfasst und/oder im Hydraulikkreis zwischen dem Hydraulikventil und dem Sperrventil ein ungesteuerter Fließabschnitt für das Fluid besteht. Dies kann insbesondere eine zwischengeschaltete Rohrleitung sein oder bei einer integrativen Bauweise des Sperrventils mit dem Hydraulikventil in einer Einheit kann zwischen den Ventilen ein ventilfreier Strömungsbereich vorgesehen sein.

In einer konkreten Ausführungsform kann die Lenkwelle einen mit einem Gewinde versehenen Abschnitt umfassen. Dabei steht ein Kolbenelement im Wirkeingriff mit dem Gewindeabschnitt der Lenkwelle und ist gegen einen die zwei Druckkammern umfassenden Zylinder drehsteif gelagert, so dass eine Drehbewegung der Lenkwelle eine entsprechende Volumenveränderung der Druckkammern bewirkt.

Weiter ist ein die Druckkammern umfassendes Hydrauliksystem von einem gegebenenfalls vorhandenen Hydrauliksystem zur hydraulischen Einstellung des Radeinschlags fluid-getrennt. Somit umfasst das Hydrauliksystem des Lenkeinschlags keine weiteren Kolben-/Zylinderbaugruppen, die über die erste und zweite Druckkammer hinausgehen.

Nachfolgend werden bevorzugte Ausführungsformen anhand der Figuren beschrieben.
- Fig. 1: zeigt einen schematischen Aufbau des Lenkradanschlags zusammen mit dem Bereich der angelenkten Räder eines nicht-spurgebundenen Kraftfahrzeugs und
- Fig. 2: zeigt einen Ausschnitt der Fig. 1 mit einer alternativen Ausführungsform des Hydraulikzylinders.

Eine Lenkhandhabe 10, oder spezieller ein Lenkrad 10, ist mit einer Lenkwelle 11 verbunden. Diese weist in einem mittleren Abschnitt ein Gewinde 19 auf. Dieses Gewinde19, welches bevorzugt ein Außengewinde ist, steht im Eingriff mit einem entsprechenden Gewinde eines Hydraulikkolbens 18. Dieser Hydraulikkolben 18 befindet sich innerhalb eines Hydraulikzylinders 12, der ortsfest an einem Fahrzeug angeordnet ist. Die Lenkwelle 11 führt koaxial durch den Hydraulikzylinder 12.

Der Hydraulikkolben 18 ist relativ zu dem Hydraulikzylinder 12 drehsteif und axial verschiebbar gelagert. Dies wird dadurch erreicht, dass zumindest ein Bolzen 16, bevorzugt zumindest zwei Bolzen 16, parallel zur Längsachse und insbesondere außermittig mit dem Hydraulikzylinder 12 verbunden ist und dabei durch eine Bohrung innerhalb des Hydraulikkolbens 18 geführt wird. Bei alternativen Ausführungsformen kann an der Innenseite des Zylinders 12 eine sich längs erstreckende Nut-Feder-Führung als Verbindung mit dem Kolben 18 vorgesehen sein.

Wird die Lenkung betätigt, so wird der Kolben 18 durch die Drehung der Lenkwelle 11 in der Zylinderlängsrichtung verschoben, so dass eine erste Druckkammer 14 und eine zweite Druckkammer 15, die sich jeweils innerhalb des Zylinders 12 ergeben und die durch den doppelt wirkenden Hydraulikkolben 18 begrenzt sind, sich in ihrem Volumen verändern. Die Verbindungsbereiche von dem Hydraulikzylinder 12 mit der Lenkwelle 11 sind über Ringdichtungen abgedichtet. Ferner sind zwischen dem Kolben 18 und dem Bolzen 16 Führungen vorgesehen und derart dimensioniert, dass sie weitgehend flüssigkeitsdicht sind. Hierfür können Dichtungen verwendet werden. Auch die Gewindeverbindung zwischen dem Kolben 18 mit der Lenkwelle 11 ist weitgehend flüssigkeitsdicht ausgeführt. Die beiden Druckkammern 14 und 15 stehen über eine Hydraulikleitung 25 miteinander in Verbindung, in welcher ein Hydraulikventil 30 und ein Sperrventil 35 angeordnet sind. Das Sperrventil 35 ist ebenfalls ein hydraulisch arbeitendes Ventil.

Das Hydraulikventil 30 umfasst drei Schaltstellungen. Bei der Durchlassstellung wird der Fluidfluss in beide Richtungen zugelassen. Bei den beiden Rückschlagstellungen wird jeweils der Fluidstrom in eine Richtung zugelassen und in die entgegengesetzte Richtung gesperrt. Das Sperrventil 35 umfasst zwei Schaltstellungen, nämlich eine Durchlassstellung und eine geschlossene Stellung, bei der der Fluidstrom unterbrochen ist.

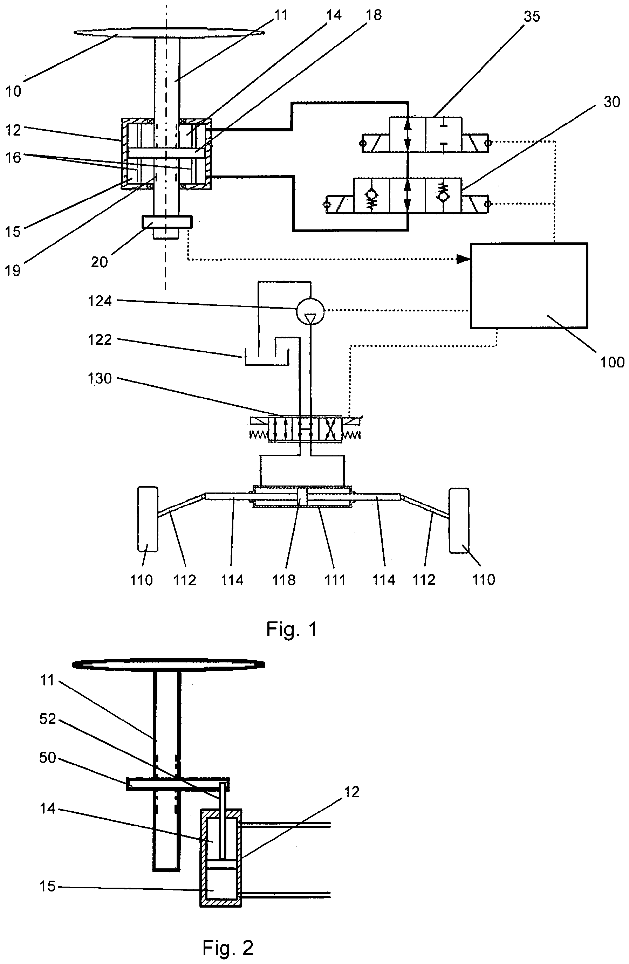

Ein Lenkgetriebe kann ein weiteres und getrenntes Hydrauliksystem zur Einstellung der Lenkeinschläge der Räder 110 aufweisen. Bei alternativen Ausführungsformen kann ein Elektroantrieb verwendet werden. Im Hydrauliksystem ist eine Hydraulikpumpe 124 vorgesehen und ein Dreiwegesteuerventil 130, welches von einer elektronischen Steuerung 100 ansteuerbar ist, so dass das Hydraulikfluid in einen Lenkzylinder 111 gelangt. So kann ein Lenkkolben 118 wahlweise innerhalb des Lenkzylinders 111 in beide Richtungen verschoben werden. Der Lenkkolben 118 ist beidseitig mit einer Kolbenstange 114 verbunden, an deren Enden eine Spurstange 112 angekoppelt ist, die jeweils mit dem entsprechenden Rad 110 verbunden ist. So kann über die Position des Lenkkolbens 118 der Lenkwinkel bzw. Einschlagwinkel der Räder 110 eingestellt werden. Wenn ein Einschlag der Räder 110 nach links gewünscht ist, so schaltet die Steuerung 100 das Dreiwegesteuerventil 130 in die Schaltstellung, die in Fig. 1 links gezeigt ist und bei der das Fluid von der Pumpe 124 in die rechte Kammer des Lenkzylinders 111 gelangt und so den Radeinschlag bewirkt. Um einen entgegen gesetzten Lenkeinschlag zu erhalten, wird das Steuerventil 130 in die entgegen gesetzte Schaltstellung gebracht und das Fluid wird in die linke Kammer des Lenkzylinders 111 gepumpt.

Bei der vorliegenden beispielhaften Ausführungsform der Erfindung beträgt das Lenkeinschlags-/Radeinschlagsverhältnis 2,5 zu 1. Das heißt, bei einem Drehwinkel des Lenkrads 10 von der Mittelstellung ausgehend von +900° in die eine Richtung kann der eine Lenkeinschlag erreicht werden und von -900° in die andere Richtung der andere Lenkeinschlag. Der Winkelgeber 20 misst die jeweilige Stellung des Lenkrads 10 und gibt das Ergebnis an die Steuerung 100. Bei der normalen Fahrweise, bei der kein maximaler Radeinschlag vorliegt, befindet sich das Hydraulikventil 30 in der Durchlassstellung.

Bei einer Rechtsdrehung des Lenkrads 10 bewegt sich der Hydraulikkolben 18 nach oben und verkleinert die erste Druckkammer 14. Wenn der Lenkeinschlag von +900° erreicht ist, so schaltet die Steuerung 100 das Hydraulikventil 30 in die erste Rückschlagstellung (rechtes Schaltsymbol des Ventils 30), bei der kein weiteres Fluid aus der ersten Druckkammer 14 abfließen kann. Die sich so ergebende Druckerhöhung erkennt der Fahrer als Widerstand und erhält unmittelbar die Rückmeldung, dass ein maximaler Radeinschlag erreicht wurde. Aufgrund der Rückschlagfunktion des Hydrauliksystems kann der Fahrer in die entgegen gesetzte Richtung lenken, und so den Lenkwinkel des Lenkrads 10 zu reduzieren. Somit wirkt die Rückschlagventilfunktion des Hydraulikventils 30 als ein einseitiger Anschlag für das Lenkrad 10. Zu beiden Drehrichtungen des Lenkrads 10 ist der Lenkradanschlag symmetrisch, bzw. identisch aufgebaut.

Situationsabhängig kann ein anderes Lenkeinschlags-/Radeinschlagsverhältnis gewünscht ' sein. Beispielsweise kann das Fahrzeug über ein sportliches Fahrprogramm verfügen. Bei einer sportlichen Fahrweise soll die Lenkung auf Lenkeinschläge des Lenkrads empfindlicher reagieren. So kann hierfür ein Lenkeinschlag von jeweils 1,5 Umdrehungen, also +/-540° dem maximalen Radeinschlag entsprechen. Bei einem Fahrprogramm für Geländefahrten kann ein veränderter maximaler Radeinschlag vorgegeben sein. Auch kann bei Rädern mit veränderten Durchmessern, (wie z.B. Sommer- oder Winterreifen) ein veränderter maximaler Radeinschlagswinkel vorgegeben sein. Des Weiteren kann geschwindigkeitsabhängig von der Fahrzeugsteuerung ein maximal zulässiger Radeinschlag vorgegeben werden. Auch in diesen Fällen ist es gewünscht, dass der Fahrer eine veränderte Rückmeldung über den maximalen Lenkeinschlag des Lenkrads 10 erhält. In diesen Fällen kann die Steuerung 100 bereits bei kleineren gemessenen Lenkeinschlägen des Winkelgebers 20 das Hydraulikventil 30 in die entsprechende Rückschlagstellung bringen, um so einen veränderten Anschlag für das Lenkrad 10 zu generieren.

Das Sperrventil 35 ist bei dem Fahrbetrieb des Fahrzeugs stets in seiner geöffneten Stellung. Wenn das Fahrzeug bspw. zum Parken abgeschaltet wird, so sorgt die Steuerung 100 dafür, dass das Sperrventil 35 in seine geschlossene Position kommt. Da nun kein Ausfluss aus beiden Druckkammern 14 und 15 mehr möglich ist, kann auf diese Weise das Lenkrad 10 nicht mehr gedreht werden und dies entspricht der Funktion eines Lenkradschlosses. Es ist aus Sicherheitsgründen unbedingt auszuschließen, dass das Sperrventil 35 während der Fahrt in die beschriebene Sperrfunktion kommt. Aus diesem Grund ist es getrennt von dem Hydraulikventil 30 ausgeführt Bei alternativen Ausführungsformen kann die Sperrfunktion aber auch als eine weitere Schaltstellung in dem Hydraulikventil 30 integriert sein.

Gemäß Fig. 1 ist der Hydraulikzylinder 12 in einem mittleren Abschnitt der Lenkwelle 11 angeordnet. Alternativ kann er am Ende der Lenkwelle 11 angeordnet sein, so dass sie nur einseitig in den Zylinder 12 eintaucht. In diesem Fall kann auf eine der beiden Dichtungen zwischen dem Zylinder 12 und der Lenkwelle 11 verzichtet werden.

Fig. 2 zeigt eine alternative Ausführungsform des Kolbens 18. Eine Mutter 50 wird über ein Gewinde der Lenkwelle 11 gekoppelt. An dieser Mutter 50 ist eine Kolbenstange 52 befestigt und diese Befestigung sorgt für eine verdrehsichere Lagerung der Mutter 50, so dass sie sich bei einer Drehung der Lenkwelle 11 in Lenkwellenlängsrichtung bewegt. Der Zylinder 12 ist doppelt wirkend, so dass sich auf diese Weise die zwei Druckkammern 14 und 15 ergeben. Ferner zeigt Fig. 2 zwei Anschlussleitungen der Druckkammern, die, wie bereits beschrieben, über das Hydraulikventil 30 und das Sperrventil 35 miteinander verbunden sind. Da bei der Ausführung gemäß Fig. 2 die Volumenströme in und aus den Druckkammern 14, 15 bei einer Kolbenbewegung unterschiedlich sind, ist hier ein Fluidausgleichsbehälter (nicht dargestellt) notwendig.

Merkmale unterschiedlicher Ausführungsformen sind frei miteinander kombinierbar.

### Bezugszeichen:

- 10: Lenkhandhabe, Lenkrad
- 11: Lenkwelle
- 12: Hydraulikzylinder, Zylinder
- 14,15: erste und zweite Druckkammer
- 16: Bolzen
- 18: Hydraulikkolben
- 19: Gewinde
- 20: Winkelgeber
- 25: Hydraulikleitung
- 30: Hydraulikventil
- 35: Sperrventil
- 50: Mutter
- 52: Kolbenstange
- 100: Steuerung
- 110: Rad
- 111: Lenkzylinder
- 112: Spurstange
- 114: Kolbenstange
- 118: Lenkkolben
- 124: Hydraulikpumpe
- 130: Dreiwegesteuerventil

## Patentansprüche

1. Lenkanschlag für ein Steer-by-Wire-Lenksystem mit einer Lenkwelle (11) zur Verbindung mit einer Lenkhandhabe (10), wobei für jede Drehrichtung der Lenkwelle (11) eine Druckkammer (14,15) für ein Hydraulikfluid vorgesehen ist, wobei ein Drehen der Lenkwelle (11) eine Volumenreduzierung einer zugeordneten Druckkammer (14,15) bewirkt und der Lenkanschlag ein Hydraulikventil (30) umfasst, um beim Erreichen von vorgegebenen Umgebungsbedingungen durch ein Schalten des Hydraulikventils (30) einen Widerstand oder eine Blockierung gegen ein weiteres Drehen der Lenkwelle (11) zu erzeugen,
**dadurch gekennzeichnet, dass**
von der Lenkwelle (11) keine mechanische oder hydraulische Kopplung zu mechanischen Komponenten der Einstellung eines Radeinschlagwinkels besteht und eine Rückschlagfunktion vorgesehen ist, um im Zustand, dass bei einer Drehung der Lenkwelle (11) in einer ersten Drehrichtung der Abfluss aus einer der Druckkammern (14) blockiert ist, ein Zufluss in diese Druckkammer (14) trotzdem möglich ist, um eine Drehbewegung der Lenkwelle (11) in die der ersten Drehrichtung entgegen gesetzten Richtung nicht zu verhindern.

2. Lenkanschlag gemäß Anspruch 1,
**dadurch gekennzeichnet, dass**
die genannten Umgebungsbedingungen durch eine messtechnische Ermittlung
- einer bestimmten oder bestimmbaren Winkelposition (20) der Lenkwelle (11) und/oder
- einer Ausrichtung oder Position eines Bauteils (114) des Lenkradanschlags und/oder
- eines bestimmten oder bestimmbaren Volumens der Druckkammer (14,15) und/oder
- eines bestimmten oder bestimmbaren Ab- oder Zuflusses aus oder in die Druckkammer (14,15)
erhältlich sind.

3. Lenkanschlag gemäß einem der vorangegangenen Ansprüche,
**dadurch gekennzeichnet, dass**
für jede Druckkammer (14, 15) die Hydraulikventilfunktion des Erzeugens eines Widerstands oder einer Blockade vorgesehen ist, wobei insbesondere beide Hydraulikventilfunktionen in einem gemeinsamen Hydraulikventil (30) angeordnet sind.

4. Lenkanschlag gemäß einem der vorangegangenen Ansprüche,
**dadurch gekennzeichnet, dass**
zwischen beiden Druckkammern (14, 15) ein Hydrauliksystem angeordnet ist, um in Abhängigkeit der Schaltstellung des zumindest einen Hydraulikventils (30) einen Fluidfluss von der einen in die andere Druckkammer (14, 15) zu ermöglichen.

5. Lenkanschlag gemäß einem der vorangegangenen Ansprüche,
**dadurch gekennzeichnet, dass**
bei einer Drehung der Lenkwelle (11) in einer ersten Richtung eine erste Druckkammer (14) in ihrem Volumen reduziert wird und das Hydraulikventil (30) eingerichtet ist, bei dem Erreichen eines Grenzwertes einen weiteren Abfluss des Hydraulikfluids aus der ersten Druckkammer (14) verhindern können und somit einen Widerstand gegen eine weitere Drehung der Lenkwelle (11) in die erste Richtung zu bewirken.

6. Lenkanschlag gemäß einem der vorangegangenen Ansprüche,
**dadurch gekennzeichnet, dass**
eine sich durch das Drehen der Lenkwelle (11) ergebende Verkleinerung des Volumens der einen Druckkammer (14) einer identischen Volumenvergrößerung der anderen Druckkammer (15) entspricht.

7. Lenkanschlag gemäß einem der vorangegangenen Ansprüche,
**dadurch gekennzeichnet, dass**
in dem Fluidkreis des Hydrauliksystems zwischen den Druckkammern ein Sperrventil (35) angeordnet ist, das insbesondere funktional von dem Hydraulikventil (30) getrennt ist.

8. Lenkanschlag gemäß einem der vorangegangenen Ansprüche,
**dadurch gekennzeichnet, dass**
die Lenkwelle (11) einen mit einem Gewinde (19) versehenen Abschnitt umfasst und ein Kolbenelement (18) im Wirkeingriff mit dem Gewindeabschnitt (19) der Lenkwelle (11) steht und gegen einen die zwei Druckkammern (14,15) umfassenden Zylinder (12) drehsteif (16) gelagert ist, so dass eine Drehbewegung der Lenkwelle (11) Volumenveränderungen der Druckkammern (14,15) bewirkt.

9. Lenkanschlag gemäß einem der vorangegangenen Ansprüche,
**dadurch gekennzeichnet, dass**
ein die Druckkammern (14, 15) umfassendes Hydrauliksystem von einem gegebenenfalls vorhandenen Hydrauliksystem zur hydraulischen Einstellung des Radeinschlags fluid-getrennt ist.

10. Lenkanschlag gemäß einem der vorangegangenen Ansprüche,
**dadurch gekennzeichnet, dass**
die Lenkhandnabe (10) ein Lenkrad (10) ist.

11. Lenkanschlag gemäß einem der vorangegangenen Ansprüche,
**dadurch gekennzeichnet, dass**
das Drehen der Lenkwelle (11) über eine Kopplung mit dem Kolbenelement (18) die Volumenreduzierung der zugeordneten Druckkammern (14, 15) bewirkt.

## Claims

1. Steering stop for a steer-by-wire steering system, having a steering shaft (11) for connection to a steering handle (10), wherein a pressure chamber (14, 15) for a hydraulic fluid is provided for each rotation direction of the steering shaft (11), wherein a rotation of the steering shaft (11) causes a volume reduction of an associated pressure chamber (14, 15), and the steering stop comprises a hydraulic valve (30) for producing resistance or blocking against further rotation of the steering shaft (11) by switching the hydraulic valve (30) when predetermined ambient conditions are reached,
**characterised in that**
there is no mechanical or hydraulic coupling of the steering shaft (11) to mechanical component parts for setting a wheel angle, and a reversing function is provided so that, in the state in which flow out of one of the pressure chambers (14) is blocked for rotation of the steering shaft (11) in a first direction, flow into this pressure chamber (14) is nevertheless possible so as not to prevent a rotational movement of the steering shaft (11) in the direction opposite to the first rotation direction.

2. Steering stop according to Claim 1,
**characterised in that**
the said ambient conditions can be obtained by metrological ascertainment of
- a determined or determinable angular position (20) of the steering shaft (11), and/or
- an orientation or position of a component (114) of the steering wheel stop, and/or
- a determined or determinable volume of the pressure chamber (14, 15), and/or
- a determined or determinable flow out of or into the pressure chamber (14, 15).

3. Steering stop according to any one of the preceding claims,
**characterised in that**
the hydraulic valve function of producing a resistance or a block is provided for each pressure chamber (14, 15), in particular with both hydraulic valve functions being arranged in a common hydraulic valve (30).

4. Steering stop according to any one of the preceding claims,
**characterised in that**
a hydraulic system is arranged between the two pressure chambers (14, 15), in order to allow a fluid flow from one pressure chamber (14, 15) into the other as a function of the switching position of the at least one hydraulic valve (30).

5. Steering stop according to any one of the preceding claims,
**characterised in that**
in the event of rotation of the steering shaft (11) in a first direction, a first pressure chamber (14) is reduced in its volume and the hydraulic valve (30) is configured so that, when a limit value is reached, it can prevent further flow of the hydraulic fluid out of the first chamber (14) and can therefore cause a resistance against rotation of the steering shaft (11) in the first direction.

6. Steering stop according to one of the preceding claims,
**characterised in that**
a reduction of the volume of one pressure chamber (14), resulting from the rotation of the steering shaft (11), corresponds to an identical volume increase of the other pressure chamber (15).

7. Steering stop according to any one of the preceding claims,
**characterised in that**
a non-return valve (35), which in particular is functionally separate from the hydraulic valve (30), is provided in the fluid circuit of the hydraulic system between the pressure chambers.

8. Steering stop according to any one of the preceding claims,
**characterised in that**
the steering shaft (11) comprises a section provided with a screw thread (19), and a piston element (18) is in active engagement with the threaded section (19) of the steering shaft (11) and is mounted in a rotationally stiff manner (16) against a cylinder (12) comprising the two pressure chambers (14, 15), so that a rotational movement of the steering shaft (11) causes volume variations of the pressure chambers (14, 15).

9. Steering stop according to any one of the preceding claims,
**characterised in that**
a hydraulic system comprising the pressure chambers (14, 15) is fluidically separated from an optionally provided hydraulic system for hydraulic adjustment of the wheel setting.

10. Steering stop according to any one of the preceding claims,
**characterised in that**
the steering handle (10) is a steering wheel (10).

11. Steering stop according to any one of the preceding claims,
**characterised in that**
the rotation of the steering shaft (11) causes a volume reduction of the associated pressure chambers (14, 15) via coupling to the piston element (18).

## Revendications

1. Butée de direction pour un système de direction Steer-by-Wire comportant une colonne de direction (11) pour la liaison avec une commande manuelle de direction (10), dans laquelle pour chaque direction de rotation de la colonne de direction (11), une chambre de compression (14, 15) pour un fluide hydraulique est prévue, dans laquelle une rotation de la colonne de direction (11) entraîne une réduction de volume d'une chambre de compression correspondante (14, 15) et la butée de direction comprend une soupape hydraulique (30) pour générer une résistance ou un blocage contre une rotation supplémentaire de la colonne de direction lorsque des conditions environnementales prédéterminées sont atteintes par une commutation de la soupape hydraulique (30),
**caractérisée en ce que**
il n'y a pas de couplage mécanique ou hydraulique aux composants mécaniques du réglage d'un angle de braquage de la colonne de direction (11) et une fonction anti-retour est prévue pour que, dans l'état où lors d'une rotation de la colonne de direction (11) dans une première direction de rotation, l'évacuation hors de la chambre de compression (14) est bloquée, un afflux dans cette chambre de compression (14) soit cependant possible pour ne pas empêcher un mouvement de rotation de la colonne de direction (11) dans la direction opposée à la première direction de rotation.

2. Butée de direction selon la revendication 1,
**caractérisée en ce que**
les conditions environnementales mentionnées peuvent être obtenues par une détermination métrologique
- d'une position angulaire déterminée ou pouvant être déterminée (20) de la colonne de direction (11) et/ou
- d'une orientation ou d'une position d'un élément (114) de la butée du volant et/ou
- d'un volume déterminé ou pouvant être déterminé de la chambre de compression (14, 15) et/ou
- d'une évacuation ou d'un afflux déterminé(e) ou pouvant être déterminé(e) hors de ou dans la chambre de compression (14, 15).

3. Butée de direction selon l'une des revendications précédentes,
**caractérisée en ce que**
pour chaque chambre de compression (14,15), la fonction de soupape hydraulique de génération d'une résistance ou d'un blocage est prévue, dans laquelle en particulier les deux fonctions de soupape hydraulique sont agencées dans une soupape hydraulique commune (30).

4. Butée de direction selon l'une des revendications précédentes,
**caractérisée en ce que**
entre les deux chambres de compression (14, 15), un système hydraulique est agencé pour permettre en fonction de la position de commutation de l'au moins une soupape hydraulique (30), un écoulement de fluide d'une chambre de compression dans l'autre (14, 15).

5. Butée de direction selon l'une des revendications,
**caractérisée en ce que**
lors d'une rotation de la colonne de direction (11) dans une première direction, une première chambre de compression (14) est réduite de volume et la soupape hydraulique (30) est réglée pour que, lorsqu'une valeur seuil est atteinte, une autre évacuation du fluide hydraulique hors de la première chambre de compression (14) puisse être empêchée et ainsi, entraîner une résistance contre une autre rotation de la colonne de direction (11) dans la première direction.

6. Butée de direction selon l'une des revendications précédentes,
**caractérisée en ce que**
une réduction de volume d'une chambre de compression (14) résultant de la rotation de la colonne de direction (11) correspond à une augmentation de volume identique de l'autre chambre de compression (15).

7. Butée de direction selon l'une des revendications précédentes,
**caractérisée en ce que**
dans le circuit de fluide du système hydraulique entre les chambres de compression est disposée une soupape de retenue (35) qui est séparée en particulier fonctionnellement de la soupape hydraulique (30).

8. Butée de direction selon l'une des revendications précédentes,
**caractérisée en ce que**
la colonne de direction (11) comprend une section dotée d'un filetage (19) et un élément à piston (18) en prise fonctionnelle avec la section à filetage (19) de la colonne de direction (11) et est montée fixement (16) contre un cylindre (12) comprenant les deux chambres de compression (14, 15) de sorte qu'un mouvement de rotation de la colonne de direction (11) entraîne des modifications de volume des chambres de compression (14, 15).

9. Butée de direction selon l'une des revendications précédentes,
**caractérisée en ce que**
un système hydraulique comprenant les chambres de compression (14, 15) est séparé pour ce qui concerne les fluides, d'un système hydraulique éventuellement présent pour le réglage hydraulique du braquage.

10. Butée de direction selon l'une des revendications précédentes,
**caractérisée en ce que**
la commande manuelle de direction (10) est un volant (10).

11. Butée de direction selon l'une des revendications précédentes,
**caractérisée en ce que**
la rotation de la colonne de direction (11) par un couplage avec l'élément à piston (18) entraîne la réduction de volume des chambres de compression correspondantes (14, 15).
